# EUROPÄISCHE PATENTSCHRIFT

(11) **EP 1 112 928 B1**
(45) Veröffentlichungstag und Bekanntmachung des Hinweises auf die Patenterteilung: **15.12.2010**
(21) Anmeldenummer: 01250001.3
(22) Anmeldetag: 02.01.2001
(51) Int. Cl.: B64C 3/14, B64C 9/18, B64C 23/06

(54) **Flügelprofil mit leistungs-steigernder Hinterkante**
Airfoil with performance enhancing trailing edge
Profil aérodynamique avec bord de fuite améliorant la performance

(30) Priorität: 31.12.1999 DE 19964114; 31.05.2000 DE 10027938
(43) Veröffentlichungstag der Anmeldung: 04.07.2001
(73) Patentinhaber: Deutsches Zentrum für Luft- und Raumfahrt e.V., 51147 Köln (DE)
(72) Erfinder: Bechert, Dietrich, Dr., 10625 Berlin (DE); Meyer, Robert, 10587 Berlin (DE); Hage, Wolfram, 10435 Berlin (DE)
(74) Vertreter: Patentanwälte Bressel und Partner

(56) Entgegenhaltungen:
- EP-A- 0 375 296
- EP-A- 0 615 903
- GB-A- 404 269
- US-A- 1 893 064
- US-A- 4 830 315
- US-A- 5 088 665
- US-A- 5 265 830
- PATENT ABSTRACTS OF JAPAN vol. 003, no. 122 (M-076), 13. Oktober 1979 (1979-10-13) & JP 54 098000 A (KAWASAKI HEAVY IND LTD), 2. August 1979 (1979-08-02)

## Beschreibung

Die Erfindung betrifft ein Flügelprofil, an dem sich bei Anströmung durch ein Fluid eine Saugseite und eine Druckseite ausbildet, insbesondere Flugzeugtragflügel oder Schaufel einer Strömungsmaschine, und das eine divergente verdickte oder abgewinkelte, auch nach Art einer Gurney-Flap, Hinterkante aufweist.

Die Erfindung kann auf folgenden Gebieten zum Einsatz kommen:
- Subsonische und transsonische Tragflügelprofile für den Reiseflug von Verkehrsflugzeugen
- Flügelklappenprofile für Start bzw. Landung von Flugzeugen
- Beschaufelungen von Strömungsmaschinen wie Kompressoren, Pumpen und Turbinen

Die Forderung nach höheren Transportleistungen bei Flugzeugen und damit nach höheren Flug - Machzahlen hat zur Entwicklung transsonischer Tragflügelprofile geführt. Einige moderne transsonische Profile weisen eine divergente Hinterkante auf, die sowohl aerodynamische wie auch strukturmechanische Vorteile hat.

Neben dem Streben nach einer Leistungssteigerung von Tragflügelprofilen gibt es die Notwendigkeit, Verkehrsflugzeuge leiser zu machen. Durch Verbesserungen auf dem Gebiet der Aeroakustik sind Strahltriebwerke als allein dominante Lärmquelle verdrängt worden. So werden Umströmungsgeräusche, die an Flügelhinterkanten und Klappen des Hochauftriebssystems bei Start und Landung entstehen, immer wichtiger. Leistungssteigerungen sind auch bei Strömungsmaschinen erwünscht. Der Auftrieb z.B. einer Kompressorschaufel wird durch eine kleine abgeknickte Hinterkante um 10-15 % gesteigert. Dadurch wird der Leistungsumsatz der Kompressorstufe einer Gasturbine entsprechend erhöht. Bisher störten jedoch die zusätzlichen Vibrationen, die hinter abgeknickten Hinterkanten in der Nachlaufströmung entstehen. Diese belasten die Schaufel und können zu vorzeitigen Ermüdungsbrüchen führen.

Bei Windkraftanlagen sind kleine abgeknickte Hinterkanten an den Flügeln bereits zur Leistungserhöhung erfolgreich eingesetzt worden. Hier stört die zusätzliche Lärmerzeugung der Nachlaufströmung hinter der abgeknickten Flügel-Hinterkante.

Der Rennfahrer und Konstrukteur Dan Gurney hatte in den siebziger Jahren kleine stark abgewinkelte Klappen an der Hinterkante von Abtrieb erzeugenden Flügeln von Rennwagen angebracht, um die Bodenhaftung dieser Fahrzeuge verbessern. Seine "Gurney-Flaps" werden seitdem bei Rennwagen-Flügeln eingesetzt. Aus einem Aufsatz von Liebeck," Design of subsonic airfoils for high lift" in der US-Zeitschrift Journal of Aircraft, Vol. 15, No. 9, Sept. 1978, S. 547-561, ist bekannt, daß "Gurney-Flaps" auch bei Flugzeug-Tragflügeln zur Auftriebserhöhung erfolgversprechend eingesetzt werden können. Im Gegensatz zu den sonst bisher eingesetzten Klappen bei Flugzeugflügeln sind "Gurney-Flaps" sehr klein, mit einer typischen Klappenlänge von nur 0,3 - 2 % der Flügeltiefe. Es wird hier die Tatsache ausgenützt, daß die hintere Abströmkante eines Flügels eine besonders starke Wirkung auf dessen aerodynamische Eigenschaften hat, insbesondere auf den Auftrieb.

Bei Flugzeugen interessieren besonders die Hochauftriebs-Konfigurationen der Tragflügel für Landung und Start und außerdem der Flug bei hoher Unterschallgeschwindigkeit. Bei der Landung von Flugzeugen ist klar, daß hoher Auftrieb wünschenswert ist, um die Landegeschwindigkeit niedrig halten zu können. Der zusätzliche Widerstand einer kleinen, steil bis hin zu rechtwinklig angestellten Klappe spielt dagegen hier keine Rolle. Beim Reiseflug eines Flugzeugs bei hoher Unterschallgeschwindigkeit ist jedoch zusätzlicher Widerstand unerwünscht. Hier führt eine "Gurney-Flap" oder eine divergierende Hinterkante am Flügel zu einer Verbesserung, obwohl diese Hinterkantengestaltung an sich zu einer geringfügigen Widerstandserhöhung beiträgt. Diese Widerstandserhöhung wird durch eine begrenzte Strömungsablösung an der Hinterkante verursacht.
Unter divergierender Hinterkante ist in diesem Zusammenhang eine Hinterkante eines Tragflügels oder seiner hinteren Klappen oder einer Schaufel bei einer Strömungsmaschine oder eines Flügels eines Propellers zu verstehen, bei der das Flügelprofil in seinem End-Querschnitt dicker ist, als an einer Stelle vor der Hinterkante; die Saug- und Druckseite des Profils entfernen sich wieder von einander und die Hinterkante weist als Abschluss quasi eine zweidimensionale Ebene auf.
Derartige Hinterkanten sind generell in den US-Patentschriften 5,265,830 und 5,076,516 dargestellt.
In der Praxis bemühte man sich dagegen in der Regel, den Hinterkantenquerschnitt so schmal und spitz wie materialbedingt möglich zu gestalten.

Die "Gurney-Flap" bzw. die divergente Flügelhinterkante erzeugt eine Druckerhöhung auf dem hinteren Teil der Flügelunterseite. Dadurch wird der Flügelauftrieb deutlich vergrößert. Andererseits kann so der gleiche Auftrieb bei niedrigerem Flügel-Anstellwinkel erreicht werden. Das entlastet die Flügel-Oberseite, deren Umströmung bei Fluggeschwindigkeiten in der Nähe der Schallgeschwindigkeit besonders verlustreich ist. Dort ist nämlich die Auftriebserzeugung mit einer örtlichen Überschallströmung auf der vorderen Flügeloberseite verbunden. Im hinteren Teil der Flügeloberseite muß diese Überschallströmung wieder zu einer Unterschallströmung werden. Dieser Übergang ist mit mehr oder weniger großen Verlusten durch Verdichtungsstöße verbunden. Diese Verluste werden einerseits durch die Verdichtungsstöße selbst hervorgerufen und andererseits durch Strömungsablösungen, die durch diese verursacht werden. Hoher Auftrieb heißt also hohe Überschallgeschwindigkeit auf der Flügeloberseite, die hohe Verluste nach sich zieht. Eine stärkere Beteiligung der Profil-Unterseite am Gesamtauftrieb kann daher eine Senkung des Gesamt-Widerstandes bedeuten.

In einem Beitrag von Henne: " Innovation with computational aerodynamics: The divergent trailing-edge airfoil " in "Applied Computational Aerodynamics", Progress in Astronautics and Aeronautics, Vol. 125 (1990), S. 221 - 261, American Institute of Aeronautics and Astronautics, Inc., Washington, wurde aufgezeigt, wie ein solches Profil mit divergenter Hinterkante sinnvoll ausgelegt werden kann. Seine Forschungsarbeit hat zur praktischen Anwendung einer divergenten Flügelhinterkante bei dem Verkehrsflugzeug MD 11 des Flugzeugherstellers McDonnell-Douglas geführt.

Eine Auftriebssteigerung durch abgeknickte Flügelhinterkanten, Gurney-Flaps, wird außerdem in der Hochauftriebskonfiguration von Flugzeugen für Start und Landung erreicht (Ross, J.C., Storms, B.L. & Carrannanto, P.G. "Lift-enhancing tabs on multielement airfoils", Journal of Aircraft, Vol. 32, No. 3, Mai-Juni 1995, S. 649-655).

EP 0 615 903 A1 beschreibt ein Rotorblatt mit einer Grenzschicht-Steuerungseinrichtung, die in Spannweite an einer unteren Oberfläche angrenzend an die Hinterkante verläuft. Derartige Blätter sind insbesondere für Helikopter geeignet. Gemäß einer Ausführungsform weist das Rotorblatt eine Strömung-Ablenkungseinrichtung auf, die sich entlang der Hinterkante erstreckt. Durch die Ablenkungsvorrichtung bildet die Hinterkante eine obere Ecke, an der die Saugseite in eine zweidimensionale Oberflächenebene der Hinterkante übergeht, und ist die zweidimensionale Oberflächenebene zur Druckseite durch eine untere Ecke begrenzt.

Die Anwendung von Gurney-Flaps auf Windturbinen ist ebenfalls schon weit fortgeschritten. Messdaten von erreichten Leistungsverbesserungen sind ersichtlich aus einem Aufsatz von Kentfield, " Theoretically and experimentally obtained performances of Gurney-Flap equipped wind turbines", US - Zeitschrift: Wind Engineering Vol. 18, No. 2, S. 63-74 (1994). Hier ist jedoch besonders die zusätzliche Geräuscherzeugung störend, die divergente oder auch abgeknickte Hinterkanten verursachen.
Ungünstig an "Gurney-Flaps" und divergenten Hinterkanten ist nach wie vor, daß sie selbst zusätzlichen Widerstand erzeugen. Außerdem tritt in ihrem Nachlaufgebiet eine Instabilität auf, die der Karman 'schen Wirbelstraße im Nachlauf eines quer-angeströmten Zylinders ähnelt. Dort wie hier tritt eine Schwingung in der Strömung auf, die Vibrationen und Geräusche verursacht. Die Bekämpfung dieser Art von Instabilität kann darin bestehen, daß man die zweidimensionale Geometrie der Strömungsanordnung stört. Bei einem quer-angeströmten Zylinder windet man z.B. eine Spirale um den Zylinder, wie man das bei Industrie-Schomstein-Rohren heute häufig sieht. Dies ist bereits dargestellt worden von Dubs, "Aerodynamik der reinen Unterschallströmung", 6. Auflage, 1990, S. 60 - 66, Birkhäuser Verlag, Basel - Boston - Berlin.

Schon die Ergebnisse vereinfachter Theorien der Tragflügelaerodynamik zeigen, dass dem Abströmwinkel an der Hinterkante besonders große Bedeutung zukommt, schematisch dargestellt in Dubbel, Taschenbuch für den Maschinenbau, 18. Aufl. 1995, Springer, Berlin, S. B61, Tragflügel und Schaufeln). Diese vereinfachten Theorien, die durchgehend anliegende Strömung voraussetzen, sind hier jedoch nur sehr bedingt aussagefähig. Aber sie machen plausibel, warum eine sehr kleine Gurney-Flap einen so hohen Auftriebsgewinn liefert.
Genauere aerodynamische Untersuchungen der Strömung hinter einer abgeknickten bzw. divergierenden Hinterkante liegen vor als Kongresspapier von Sauvage, P., Pailhas, G. & Coustols, E. "Detailed flow pattern around thick cambered trailing edges", 7th Asian Congress of Fluid Mechanics, Chennai, Madras, IN, 8 - 12 Dez. 1997.

Durch eine abgeknickte oder keilförmig divergierend ausgebildete Hinterkante eines Tragflügels kann dessen Auftrieb gesteigert werden. Die Veränderung der Hinterkante ist dabei sehr klein und besteht z.B. in einer Abknickung oder Gurney-Flap, die eine Höhe von nur 0.3 - 1% der Tragflügel-Profiltiefe ausmacht. Dadurch wird eine beträchtliche Erhöhung des Tragflügel-Auftriebs von 5 - 25% erreicht. Hinter der abgeknickten bzw. divergierenden Hinterkante bildet sich jedoch eine örtlich begrenzte Strömungsablösung aus, die einen Widerstand verursacht.

Es wurden in der Literatur auch schon andere, allerdings grobe, Strukturen veröffentlicht, die in der Praxis keinen Erfolg hatten.
Mit der DE - A - 42 08 751 wurde vorgeschlagen, Körper wie Rotoren von Jet-Antrieben, Ventilatoren, Booten, Flugzeugen etc. zur Verringerung des Wasser- bzw. Luftwiderstandes den vorderen Rand des Körpers und / oder den hinteren Rand zu zahnen, wodurch am hinteren Rand die Wirbelbildung herabgesetzt werde. In der Zeichnung der Offenlegungsschrift sind dabei in der generellen Strömungsrichtung an den Flügelvorderkanten bzw. Flügelhinterkanten horizontal sich erstreckende Profilverlängerungen dargestellt, die in der Flügel-Ebene, aber quer zur Strömungsrichtung, zahnförmige Gestalt haben. Die Wirkung einer divergenten und / oder abgewinkelten Hinterkante blieb unbeachtet.
In der DE-U-90 17 288 wird vorgeschlagen, Flügel und Spoiler aerodynamisch zu optimieren, indem Tragflächen und Leitwerke von Luftfahrzeugen zumindest teilweise in Wellenform auszubilden, die sich im wesentlichen längs in Strömungsrichtung erstrecken. Dadurch soll am Flugzeug strömende Luft kanalisiert und eine vergleichsweise größere Kontaktfläche erzielt werden, um erhöhten Auftrieb oder Vorschub zu erhalten.

Eine weitere Alternative zeigt eine praktikablere Lösung auf. In der US-A-5,265,830 wird bei einer divergenten Hinterkante am Flügelprofil eine Technik zur Verminderung des durch eine periodische Strömungsablösung hervorgerufen Widerstandes durch die Einführung einer sogenannten Splitter Plate beschrieben. Diese Splitter Plate ist ein wirksames Mittel, um den Widerstand eines Flügelprofils mit einer divergenten Hinterkante herabzusetzen; sie ist senkrecht oder in einem kleinen Winkel zur generellen Flügelprofilebene bzw. Strömungsrichtung sich erstreckend an die verdickte Hinterkante angesetzt.
Bei Flügeln kleiner Profiltiefe ist die Anbringung einer Splitter Plate aus konstruktiven Gründen nicht mehr möglich, beispielsweise für die Anwendungen in Strömungsmaschinen, wo die Flügeltiefe nur in der Größenordnung von wenigen Zentimetern liegen kann.

US 5,088,665 beschreibt eine Vorrichtung zur Verbesserung der Auftriebs- und Widerstands-Charakteristiken einer Auftriebs-Oberfläche, wobei die Vorrichtung einen gezahnten Streifen mit einer Vielzahl von in SpannweitenRichtung periodisch angeordneten Ausnehmungen aufweist und wobei der gezahnte Streifen an der Hinterkante der Auftriebs-Oberfläche angeordnet ist. Der gezahnte Streifen kann auch nach unten abgewinkelt an der Hinterkante angeordnet sein.

Von daher liegt der Erfindung das Problem zugrunde, mit einer für alle Anwendungen geeigneten Hinterkante an einem Fügelprofil den Widerstand zu senken und resultierenden zusätzlichen Lärm zu vermindern, den diese Hinterkanten erzeugen und dabei Alternativen zu der Splitter Plate aufzuzeigen.

Das Problem wird erfindungsgemäß gelöst durch ein Flügelprofil mit den Merkmalen des Anspruchs 1. Vorteilhafte Weiterbildungen der Erfindung sind in den Unteransprüchen erfasst. Die Beschreibung und die Zeichnungen enthalten jedoch auch Beispiele von anderen Profilen, die nicht in den Schutzbereich der Ansprüche fallen.

Tragflügelprofile, hier stellvertretend für die eingangs bereits dargestellten weiteren Anwendungsfälle definiert, an denen die Erfindung wirksam wird, werden durch folgende Eigenschaften charakterisiert: Die Flügelhinterkante hat im Gegensatz zu einem konventionellen Tragflügelentwurf eine endliche Dicke. Die Ober- und Unterseiten - Saug- und Druckseiten des Flügels - der

Profilhinterkante sind divergent. Auf der Unterseite ist zur Hinterkante hin ein kleiner Radius oder ein stumpfer bis rechter Winkel ausgebildet. Der Tragflügel kann jedoch auch ein konventionelles Profil mit einer dünnen Hinterkante sein, an dem nachträglich eine verdickte Hinterkante oder ein kleiner nach unten ragender Winkel angebracht wurde.

Durch diese divergente Hinterkante kommt es zu einer veränderten Abflussbedingung für die Strömung. Diese führt zu einer Auftriebserhöhung des Profils und dabei jedoch auch zu einer leichten Widerstandserhöhung. Bei geeigneter Profilauslegung ist aber wegen der besseren Gleitzahl - dem Verhältnis von Auftrieb zu Widerstand - die Bilanz des Profilentwurfs positiv.

Gleichzeitig kommt es zu periodischen Ablösungen (Karman' sche Wirbelstraße) an dieser im Vergleich zu einem herkömmlichen Profil aufgedickten Profilhinterkante. Dieses Phänomen wird auch in geringerem Maß an konventionellen Profilen beobachtet, die ja auch keine wirklich spitz auslaufende Hinterkante haben, sondern immer noch eine endliche Dicke an der Hinterkante aufweisen. Das führt zu Vibrationen und Lärmentwicklung. Die dafür verantwortliche periodische Ablösung läßt sich im Spektrum der Geschwindigkeitsschwankungen des Nachlaufs eines solchen Profils als diskrete Frequenz nachweisen.

Bei den gattungsgemäßen Fügelprofilen sind die divergente, verdickte Hinterkante mit Mitteln zur Unterdrückung einer periodischen Strömungsablösung ausgestattet. Mit der Splitter Plate wird z.B. im Nachlauf eines stumpfen Körpers verhindert, dass eine Wechselwirkung zwischen einer zweiseitigen Scherschichtentwicklung, die auf der Saugseite und an der Druckseite der verdickten Hinterkante auftritt. Wird nun eine Splitter Plate in den Bereich direkt an der Hinterkante eingeführt, so sind die beiden Scherschichten, die sich bei dem Ablösen an der Hinterkante mit einander in Wechselwirkung treten würden, räumlich voneinander getrennt. Diese Trennung unterdrückt eine Interaktion zwischen den beiden Scherschichten.

Die quasi zweidimensionale Geometrie der Hinterkante, der hinteren Fläche, des Profils, welche periodische Strömungsvorgänge begünstigt, kann schwingungsstabilisierend verändert werden, ohne die günstigen Eigenschaften der Hinterkantengestaltung des Profils zu verlieren. Dies wird erreicht, indem die zweidimensionale Geometrie der Hinterkante in geeigneter Weise in eine dreidimensionale Geometrie überführt wird. Dabei werden die aerodynamischen und strukturmechanischen Eigenschaften nicht negativ beeinflusst.
Dabei kann ein Mechanismus genutzt werden, der sich in seiner Wirkweise stark von der Splitter Plate unterscheidet. Im Fall der strukturierten divergenten Hinterkante oder einer nach unten weisenden Kante oder Klappe wird die Scherschicht beim Überströmen dieser

Hinterkanten mit den unten näher beschriebenen geometrischen Eigenschaften in ihrer ebenen Struktur gestört. So wird eine periodische Strömungsablösung ebenfalls unterdrückt, da die für die Periodizität notwendige Zweidimensionalität der beiden Scherschichten gestört wird. Das Ergebnis ist überraschend und in diesem Zusammenhang neu und nur mit einem tiefen Verständnis der Strömungsvorgänge zu entwickeln gewesen.

Eine erste Lösung, die nicht durch den Anspruch 1 definiert ist, umfasst ein Flügelprofil, an dem sich bei Anströmung durch ein Fluid eine Saugseite und eine Druckseite ausbildet, insbesondere Flugzeugtragflügel oder Schaufel einer Strömungsmaschine, und das eine divergente verdickte oder abgewinkelte Hinterkante aufweist bzw. eine Gurney-Flap, wobei die Hinterkante an der Saugseite und / oder der Druckseite mit Mitteln zur Störung einer periodischen Strömungsablösung und / oder zur Strömungsstabilisierung ausgestattet ist.

Dabei sind die Mittel für die Druckseite ausgewählt aus einer Gruppe von Mitteln, umfassend: an der Druckseite vor der Hinterkante angeordnete oder sich bis dorthin erstreckende Einschnitte oder Stege, zur Druckseite und / oder von der Hinterkante weg sich erstreckende Einzelelemente, Perforationen der Abwinkelung, in vertikaler Richtung senkrecht oder schräg unter einem Winkel zur Druckseite hin weisende und zugleich horizontal sich erstreckende sägezahnförmige oder wellenförmige Elemente.

Weiterhin umfassen die Mittel für die Saugseite: vor der Hinterkante angeordnete oder sich bis dorthin erstreckende Elemente oder Stege, die vorzugweise im Querschnitt die Form eines Dreiecks, Trapezes oder einer Welle aufweisen.
Die Stege, die als der Hinterkante vorgelagerte Rippen ausgestaltet sind, sind ausgerichtet in Strömungsrichtung .
Die Mittel können als rechteckige, dreieckige, trapezförmige oder abgerundete wellenförmige Einschnitte oder Elemente ausgebildet sein.

Die Mittel erstrecken sich über eine Länge bzw. Höhe von bis zu etwa 5 % bzw. 3%, vorzugsweise 0,3 % bis 2%, der, durch den Abstand von Vorderkante zur Hinterkante eines Flügels definierten, Flügeltiefe.

Gemäß einer Ausgestaltung eines Flügelprofils, an dem sich bei Anströmung durch ein Fluid eine Saugseite und eine Druckseite ausbildet, insbesondere Flugzeugtragflügel oder Schaufel einer Strömungsmaschine, und das eine divergente verdickte oder abgewinkelte Hinterkante aufweist, sind hinter der Hinterkante Mittel zur Behinderung einer Rückströmung des Fluids angeordnet.
Erfindungsgemäß weisen diese Mittel profilierte Körper auf, die als Stäbe senkrecht zur Strömungsrichtung an der Saug- oder Druckseite angeordnet und mit der Hinterkante durch Stege verbunden sind, wobei, besonders bevorzugt, die profilierten Körper in Strömungsrichtung von der Hinterkante beabstandet sind und in Strömungsrichtung mehrere profilierte Körper in Abständen zueinander angeordnet sind. Diese Stäbe sind insbesondere parallel zur Hinterkante angeordnet und deren Grundform ist im Querschnitt annähernd rechteckig, dreieckig oder tropfenförmig.

Letztlich kann mindestens einer der profilierten Körper bewegbar gelagert und zur Druckseite hin verstellbar sein.

Dieses Flügelprofil der zweiten Lösung kann zusätzlich auch die Merkmale der ersten Lösung aufweisen.

Die widerstandsvermindernde dreidimensionale Hinterkante eliminiert die periodischen Vorgänge fast vollständig. Dies ist durch Messungen im Windkanal nachgewiesen worden. Besonders bei kleinem Anstellwinkel, bei dem die periodische Ablösung besonders ausgeprägt ist, ist der widerstandsvermindernde Effekt der dreidimensionalen Hinterkante besonders wirksam. Dadurch wird die Entstehung der periodischen Ablösung derart gestört, daß die Nachlaufdelle in der Geschwindigkeitsverteilung am Flügelprofil verkleinert wird und somit der Widerstand des Profils verringert wird. Durch Kraftmessungen mit einer Windkanalwaage ist diese Widerstandsverminderung ebenfalls bestätigt worden.

Dies vermeidet des weiteren Vibrationen durch eine geeignete dreidimensionale Struktur der Hinterkante von Strömungsmaschinen-Schaufeln und erreicht überdies wird eine größere Steifigkeit und Schwingungsfestigkeit der Schaufel.
Die Lösung reduziert bei Windkraftanlagen durch Stabilisierung der Nachlaufströmung die Lärmerzeugung.
Allgemein gelingt es mit der Lösung, die Strömungs-Instabilität in der Karmanschen Wirbelstraße erfolgreich zu bekämpfen, es sinkt damit auch der Strömungswiderstand.
Durch den relativ einfachen Aufbau der Lösung eignet sich diese in einigen Varianten auch zu einer Nachrüstung an einem bereits vorhandenem Flügel.

Schematische Ausführungsbeispiele werden im folgenden näher erläutert. Lediglich Fig. 21, 23 und 26 zeigen Profile mit Nachlaufkörpern gemäß der erfindungsgemäßen Lösung, die in Anspruch 1 definiert ist. Es zeigen:
- Fig.1: Strömungsverlauf um ein Flügelprofil (A) und die vergrößert dargestellte abgeknickte bzw. divergierende Hinterkante (A-A);
- Fig.2: Diagramm des Spektrums der Geschwindigkeitsschwankungen am Rand des Totwassers gemäß Darstellung in Fig.1;
- Fig.3: Polaren mit zweidimensionaler und dreidimensionaler Hinterkante;
- Fig.4: Strömungsverlauf und Spektren der Geschwindigkeitsschwankungen an der Flügelhinterkante,
- Fig.5 - 7: Hinterkante mit Einschnitten;
- Fig.8 - 10: Hinterkante mit druckseitig angeordneten Elementen;
- Fig.11-15: Gurney-Flaps in Varianten;
- Fig.16: Flügel mit nachträglich aufgebrachter Hinterkante;
- Fig.17: Abgeknickte Hinterkante mit Loch - Perforation;
- Fig.18: Abgeknickte Hinterkante mit Wellung in Spannweitenrichtung;
- Fig.19: Flügel mit abgeknickter Hinterkante und Versteifungen;
- Fig.20: Divergente perspektivisch gezeigte Hinterkante mit saug - und druckseitigen Störungsmitteln;
- Fig.21: Divergente perspektivisch gezeigte Hinterkante mit Nachlaufkörpern;
- Fig.22: Diagramm der Polaren eines Referenz-Messflügels ohne und mit Gurney-Flap;
- Fig.23: Flügelprofil mit abgeknickter bzw. divergierender Hinterkante im Schnitt, ausgerüstet mit Nachlaufkörpern;
- Fig. 24: Diagramm der Polaren zum Vergleich verschiedener Maßnahmen zur Nachlauf-Stabilisierung;
- Fig.25: Kompressorschaufel mit divergierender Hinterkante, mit Störungsmitteln an der Druckseite (B) und der Saugseite (A);
- Fig.26: Technisch schematische Ausführung eines Flügels mit divergierender Hinterkante und Nachlaufkörper, in perspektivischer Ansicht saugseitig (A) und saugseitig teils vergrößert (A-A) bzw. druckseitig (B) und druckseitig teils vergrößert (B-B).

In der folgenden Beschreibung bezeichnen dieselben Bezugszeichen identische oder äquivalent wirkende Elemente.
Die Lösungen, die teilweise nicht durch Anspruch 1 definiert sind, werden mit ihren Wirkprinzipien im Folgenden im Zusammenhang dargestellt.

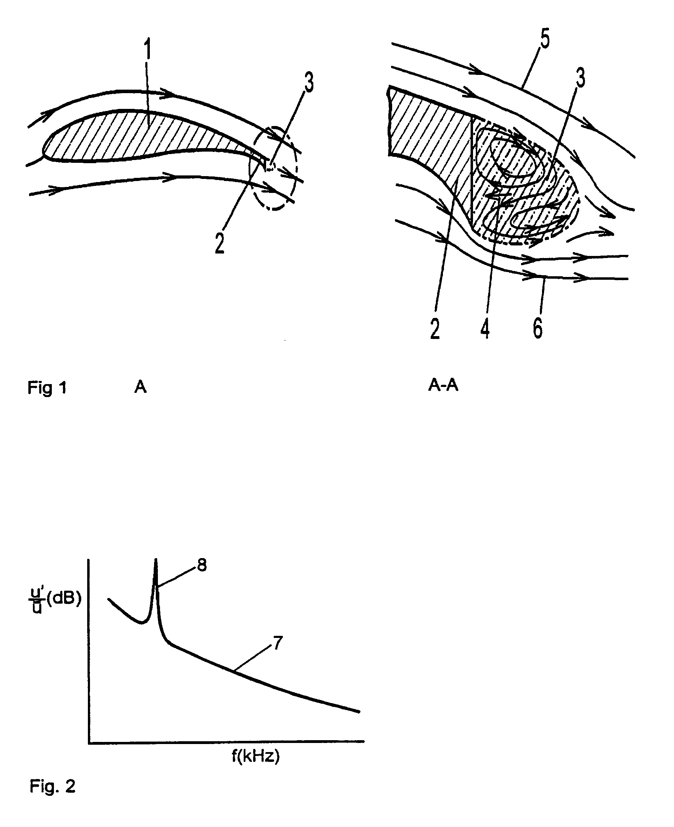

Prinzipiell wird bei Flügelprofilen mit divergenter oder abgeknickter Hinterkante ein Verlauf der mittleren Strömung eines Fluids gefunden, wie es in Fig. 1 im Teilbild A mit Schnitt durch den gesamten Flügel, in Teilbild A-A gemäß strichpunktiertem Kreis von Teilbild A vergrößert gezeigt ist. Die Strömung hinter einer abgeknickten Hinterkante 2 eines Tragflügelprofils 1 weist eine Strömungsablösung mit Totwasser 3 auf. In dem Totwasser bildet sich eine Rückströmung 4 aus. Im äußeren Bereich über dem Totwasser läuft die Grenzschichtströmung 5 von der Tragflügeloberseite / Saugseite des Profils fast ungestört weiter, wird jedoch durch die Ansaugung vom unteren Rand 6 des Totwassers etwas nach unten abgelenkt. Eine verstärkte Ablenkung der Strömung nach unten ist gleichbedeutend mit einem erhöhten Auftrieb. Der erhöhte Auftrieb muss sich auch in einer Veränderung der Druckverteilung auf dem Tragflügelprofil niederschlagen. Eine erhöhte Auftriebskraft auf der Profiloberseite entsteht dadurch, dass der - im Vergleich zur Umgebung - etwas erniedrigte Druck des Totwassers 3 auf der Tragflügeloberseite, der Saugseite, spürbar wird. Der erniedrigte Druck ist gleichbedeutend mit einer zusätzlichen Saugkraft, die den Auftrieb erhöht.

Die Strömung um die Unterseite, der Druckseite des Tragflügelprofils wird jedoch noch gravierender verändert. Im Bereich vor der Gurney-Flap wird die Strömung aufgestaut. Dadurch erhöht sich dort der Druck fast bis auf den Wert des Staudrucks der Strömung. Dies führt zu einem deutlich erhöhten Auftrieb durch den Beitrag der Tragflügel-Unterseite. Nach Passieren der Kante 2 der Gurney-Flap stellt sich an der freien Stromlinie am unteren Rand des Totwassers, der Grenzschichtströmung 6, jedoch schnell wieder der Druck des Totwassers ein. Dieser liegt geringfügig unter dem Druck der Umgebung. Daher ist die Strömungsgeschwindigkeit dort etwa gleich der Anströmgeschwindigkeit des Profils, bzw. geringfügig darüber, wenn man die Bernoulli'sche Gleichung zur Abschätzung der Geschwindigkeit benützt. Diese relativ hohe Geschwindigkeit und die relativ dünne Scherschicht der Grenzschichtströmung 6 am unteren Totwasserrand verursachen ein Ansaugen von Fluid nach unten.

Die bisherigen Betrachtungen betrafen den Auftrieb.
Die Gurney-Flap erzeugt jedoch auch Widerstand; der lässt sich ebenfalls mit Fig. 1 verdeutlichen. Vor der Gurney-Flap wirkt hoher Druck in Strömungsrichtung auf die Gurney-Flap. Hinter der Gurney-Flap ist der Druck etwas abgesenkt. Der parasitäre Widerstand, den die Gurney-Flap zusätzlich erzeugt, ergibt sich aus dem Produkt von der Projektion der Fläche der Gurney-Flap in Strömungsrichtung und der Druckdifferenz auf beiden Seiten, davor und dahinter. Diesen parasitären Widerstand gilt es zu vermindern.

Außer den Strömungsmittelwerten, wie sie durch Pfeile in Fig. 1 gezeigt werden, sind jedoch auch die instationären Anteile Strömung hinter der Gurney-Flap wichtig. Am oberen und unteren Rand 6 des Totwassers misst man z.B. mit einer nicht dargestellten Hitzdrahtsonde Geschwindigkeitsschwankungen u' in Richtung der mittleren Strömung u .
Dabei findet man ein Frequenzspektrum f (kHz) der relativen Geschwindigkeitsschwankungen u' / u, wie in Fig. 2 dargestellt. Einerseits ergibt sich ein breitbandiges Spektrum 7, das durch die stochastischen Schwankungen der turbulenten Grenzschichten des Tragflügelprofils erzeugt wird. Andererseits beobachtet man eine scharfe Spitze 8 im Spektrum der Geschwindigkeitsschwankungen. Dies ist eine periodische Schwankung oder Nachlaufdelle, wie sie auch von der Nachlaufströmung hinter einem umströmten Zylinder als Karman'sche Wirbelstrasse bekannt ist. Seit einigen Jahren ist es möglich, das Auftreten dieser periodischen Schwankung und deren Frequenz vorauszusagen. Das Auftreten einer solchen periodischen Schwankung wird als absolute Instabilität bezeichnet. Dabei trägt das Vorhandensein einer Rückströmung zum Auftreten der absoluten Instabilität besonders bei. Wenn andererseits die Nachlaufströmung besonders unsymmetrisch ist, d.h. die Grenzschicht auf der Profilsaugseite viel dicker ist als auf der Profildruckseite, dann verschwindet die absolute Instabilität. Das führt zum Verschwinden der in Fig. 2 dargestellten scharfen Spitze 8. Ein solcher Fall tritt in Realität bei hohen Anstellwinkeln des Tragflügelprofils auf.

Der Unterschied zwischen dem konventionellen Stand der Technik und einer weiterentwickelten Technik wird an dem folgenden Vergleich besonders deutlich. Die nicht gattungsgemäße Sonder-Variante der Splitter Plate wird dabei nicht betrachtet.

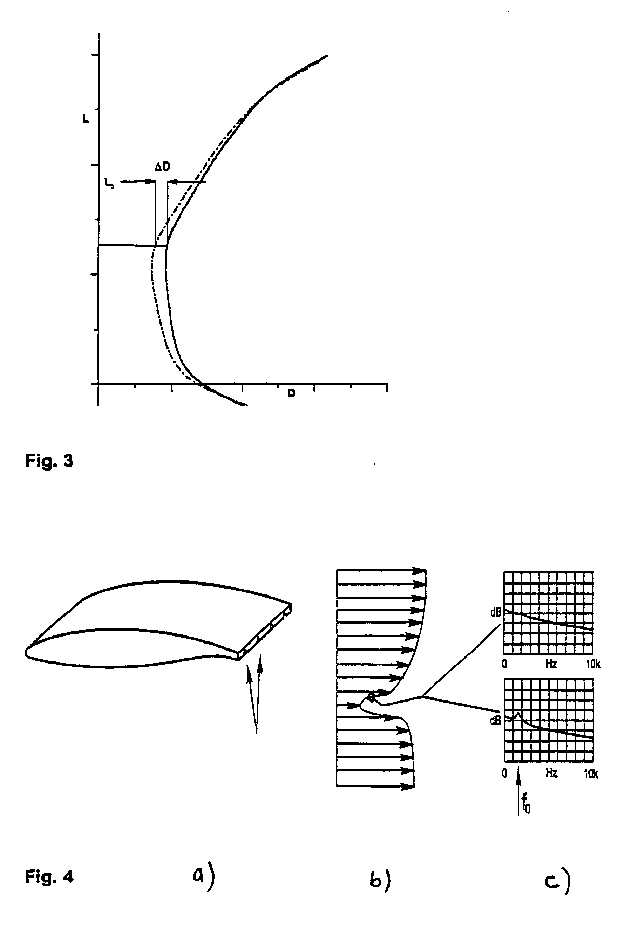

Fig. 3 zeigt die Messergebnisse einer Widerstandspolare eines Flügels mit dreidimensionaler Hinterkante (Strich-Punkt-Linie) im Vergleich zu einer Widerstandspolare eines Flügels mit zweidimensionaler Hinterkante (durchgezogene Linie). Auf der Abszisse ist der Auftrieb L und auf der Ordinate der Widerstand D der jeweiligen Flügel aufgetragen. Bei konstantem Auftrieb L₀ sinkt der Widerstand D eines mit dreidimensionaler Hinterkante ausgerüsteten Flügels um den Betrag _D ab.

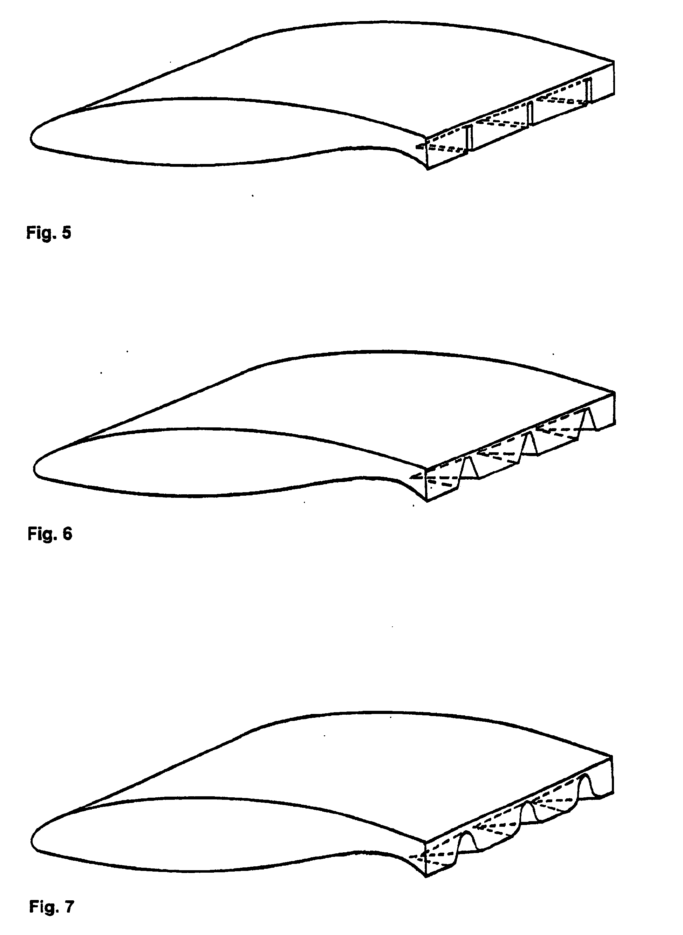

Fig. 4 zeigt schematisch das im Nachlauf des Flügels mit dreidimensionaler Hinterkante gemessene Spektrum der Geschwindigkeitsschwankungen (oberes Teilbild c) im Vergleich zu dem Spektrum des Nachlaufs des Flügels mit zweidimensionaler Hinterkante (unteres Teilbild c). Die Spektren wurden mittels Fourier-Analyse aus den Daten von Hitzdrahtmessungen der Geschwindigkeitsverteilung (Teilbild b) im Nachlauf der untersuchten Flügelprofile ermittelt. Gegenüber einem Flügel mit zweidimensionaler Hinterkante wird die diskrete Frequenz f₀, die die periodische Strömungsablösung einer nicht erfindungsgemäß ausgebildeten Hinterkante - unten im Teilbild c) mit einer Frequenzdarstellung von 0 - 10 kHz - kennzeichnet, bei einem Flügel mit dreidimensionaler Hinterkante, hier weisen im Teilbild a) die Pfeile auf Schlitze und im oberen Teilbild c) sind die zugehörigen Frequenzen zu sehen, nahezu vollständig unterdrückt. Dieser Effekt ist über die gesamte Spannweite des Flügels ausgeprägt, besonders direkt hinter dem Schlitz, der die zweidimensionale Hinterkante in eine dreidimensionale Struktur abändert.
Die Gestaltung der dreidimensionalen Hinterkante zeichnet sich dadurch aus, daß die vormals durchgehend ausgeführte Hinterkante durch Unterbrechung in eine neue Form überführt wird. Dies kann durch Einschnitte in die bestehende Gestaltung der Hinterkanten erfolgen.
Einige mögliche Gestaltungen der Einschnitte sind in den folgenden Figuren 5 - 7 dargestellt als rechteckiger, als trapezförmiger und als sanft gerundeter Einschnitt, der jeweils an der Druckseite des Profils, in der Regel der Unterseite des Tragflügels eines Flugzeuges, in die Hinterkante eingelassen ist und sich von der Hinterkante in die Flügeltiefe erstreckt, wobei die Länge des Einschnittes etwa 3% - 5% der Flügeltiefe nicht übersteigt. Der Anteil der Schnitttiefe in Bezug auf die Höhe der Hinterkante wird der Wirbelbildung entsprechend angepasst und überschreitet ein Maß von etwa 3% der Flügeltiefe nicht. Die Einschnitte in der Hinterkante können auch nach vorne aufgeweitet sein, um durch eine
Düsenform die Strömungsverluste zu vermindern.

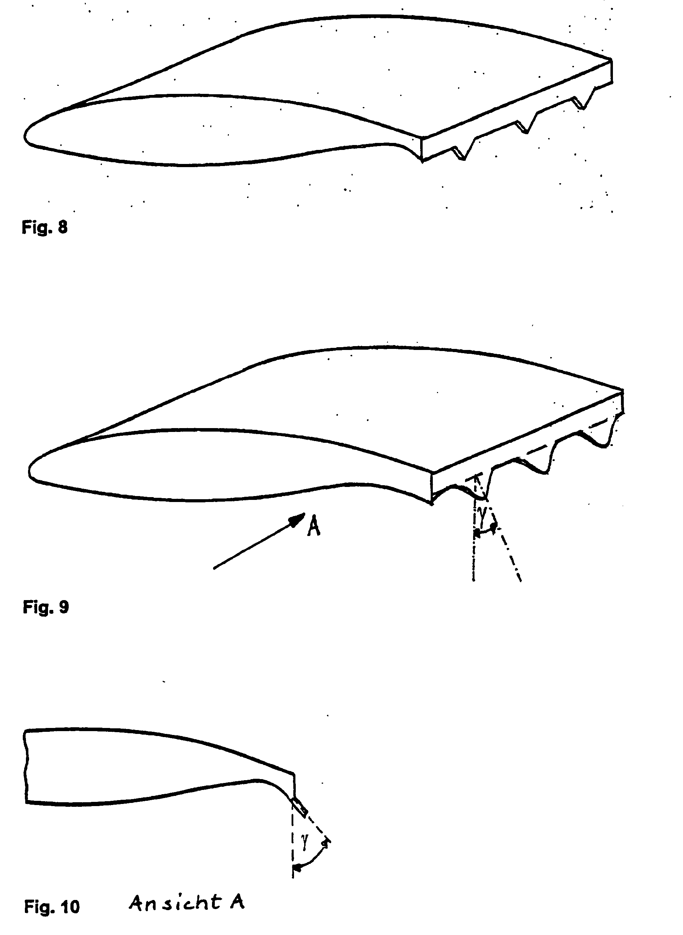

Außerdem besteht die Möglichkeit, durch Aufsetzen von kleinen Strukturen auf das bestehende Profil die gewünschte Gestaltung zu erreichen. Dadurch wird eine mechanische Schwächung der Hinterkante vermieden.
Die nach unten weisenden Elemente in Fig. 8 können ihrerseits einen Winkel zu der verdickten Hinterkante oder der abgewinkelten Hinterkante einnehmen. Diese Gestaltung ist perspektivisch in Fig. 9 und als Seitenansicht A zu Fig. 9 in Fig. 10 dargestellt; die Elemente sind unter einem spitzen Winkel γ nach unten - zur Druckseite - angestellt.

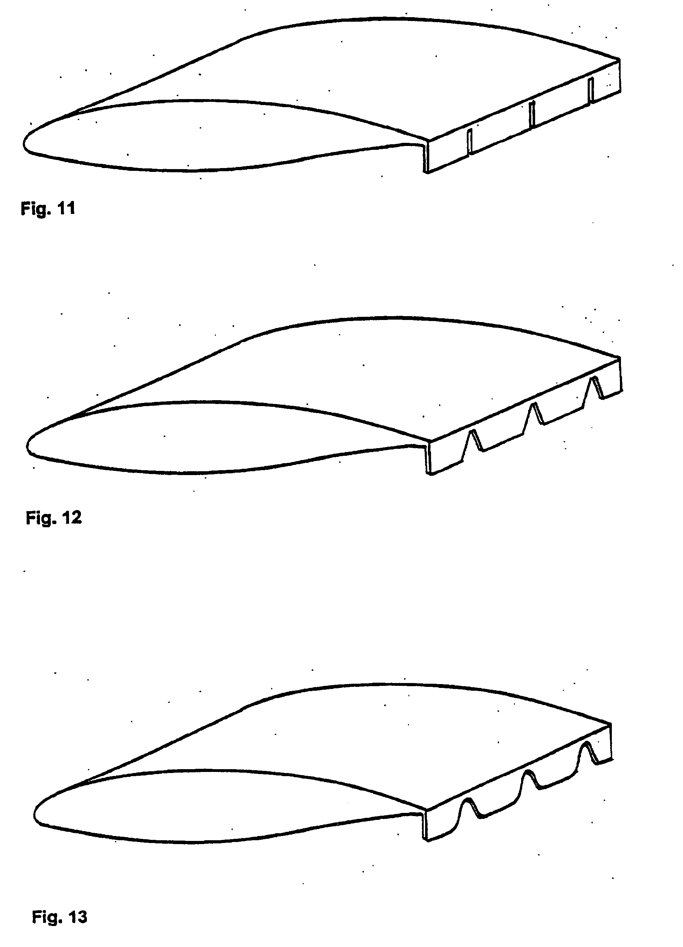

Ähnliche Ausführungsformen sind möglich, wenn es sich um eine abgewinkelte Hinterkante (Gurney-Flap, Fig. 11 - 19) handelt. Mögliche Gestaltungen der Einschnitte für diese Konfiguration sind in den Fig. 11, mit vertikalen, rechteckigen Einschnitten, Fig. 12, mit dreieckigen Einschnitten, Fig. 13, mit gerundeten oder wellenförmigen Einschnitten dargestellt.

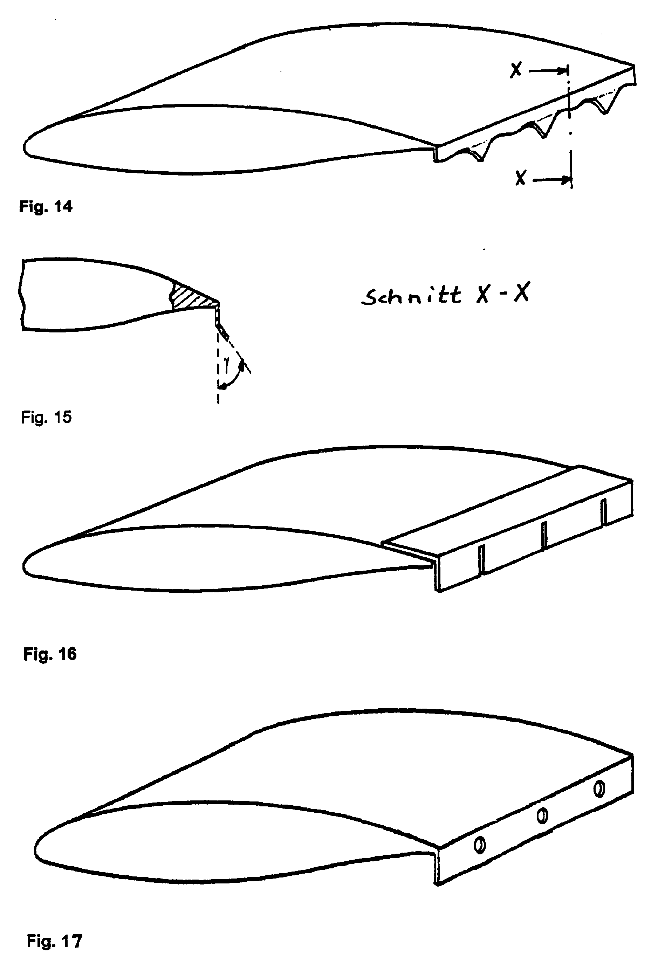

Es ist von besonderem Interesse, die Abströmung der Gurney-Flap nicht ungünstig zu verändern. Dies wird dadurch erreicht, daß die dreidimensionale Hinterkante eine mittlere effektive Höhe hat, die derjenigen der bisherigen zweidimensionalen Gurney-Flap entspricht. Dies wird durch zusätzliche Ansätze, beispielsweise als Dreiecke oder gemäß Fig. 14 komplexere Ansätze mit leichten Einschnitte in die sonst zweidimensionale Hinterkante, erreicht. Dies ist in Fig. 15, mit einem Anstell - Winkel γ, als vertikaler Teilschnitt X-X durch eine Gestaltung gemäß Fig. 14, abgebildet.

Bei nachträglicher Anbringung einer abgeknickten Hinterkante an ein vorhandenes Flügelprofil ist es vorteilhaft, diese auf die Oberseite des Flügels (Fig. 16) aufzukleben. Da die Grenzschicht auf der Oberseite des Flügelprofils dicker ist, stört eine kleine Stufe, wie sie durch das Aufbringen, bzw. Aufkleben eines abgewinkelten Blechs auftritt, nicht so stark. Ferner ist es vorteilhaft, ein solches abgewinkeltes Blech etwas nach hinten versetzt aufzukleben, sodaß die Abwinkelung nicht direkt am Flügel-Endprofil liegt, da dann der negative Effekt der Profilendkantendicke des ursprünglichen Profils nicht so sehr ins Gewicht fällt.

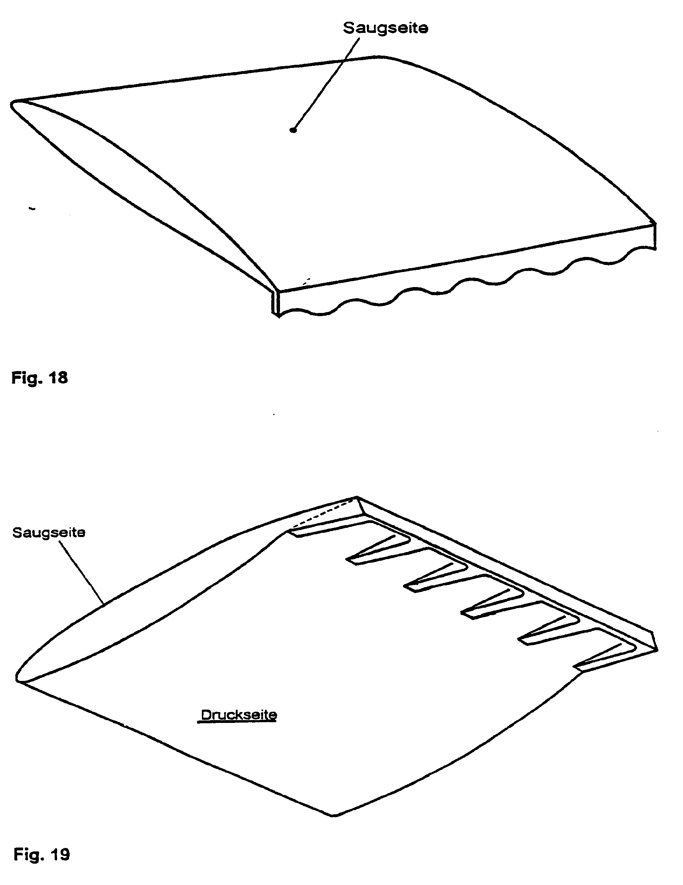

Bei Anwendung z.B. in Strömungsmaschinen kann es erwünscht sein, die abgeknickte Hinterkante durchgehend aus einem Stück zu fertigen, um eine hohe Zuverlässigkeit des Bauteils zu erreichen. Außerdem ist es günstig, die erhöhte Steifigkeit und Festigkeit zu nutzen, die sich durch die größere Dicke der Flügelhinterkante ergibt. Dann sind Schlitze in der Flügel-Hinterkante jedoch ungünstig, weil sie die Steifigkeit vermindern, als Kerben wirken, und Ermüdungsbrüche begünstigen können. Trotzdem muß erreicht werden, daß die Nachlaufströmung hinter der Flügelhinterkante so dreidimensional verändert wird, daß eine strömungsmechanische Instabilität (Karman' sche Wirbelstraße) nicht mehr auftritt. Dieses Ziel kann durch verschiedene Konfigurationen erreicht werden. Fig. 17 zeigt eine abgeknickte Hinterkante, die durch Lochung perforiert ist. Eine Dreidimensionalität der Hinterkanten-Abströmung kann auch durch eine zusätzliche gewellte Hinterkante (Fig. 18) erreicht werden.

Besonders günstig ist eine Konfiguration, bei der die Anforderungen nach guter Steifigkeit, Festigkeit und Nachlauf-Strömungsstabilisierung kombiniert erfüllt sind. Eine solche Hinterkanten-Konfiguration zeigt Fig. 19. Die dreidimensionale Störung der Nachlaufströmung wird durch druckseitig in Richtung der Hauptströmung angeordnete Stege erreicht, die an die abgeknickte Hinterkante - hier als Gurney-Flap ausgebildet - anschließen und mit ihr mechanisch verbunden sind. Eine solche Struktur kann z.B. durch Gießen oder durch Formung mittels galvanischer Abtragung hergestellt werden. Sie kann auch als vorgeformte Einheit, z.B. aus Faserkunststoff gefertigt, auf einen Flugzeugtragflügel von unten aufgebracht werden.

Das Auftreten der absoluten Instabilität mit einer periodischen Nachlaufströmung führt zu starken periodischen Wirbeln, wie sie von der Karman'schen Wirbelstrasse bekannt sind. Der damit verbundene erhöhte Impulsaustausch in der Nachlaufströmung verursacht erhöhten Widerstand. Wenn es also gelingt, die absolute Instabilität zu unterdrücken, sinkt gleichzeitig der Widerstand. Eine Stabilisierung der Nachlaufströmung ist auf folgende Arten möglich:
- Behinderung der Rückströmung im Totwasser hinter der Gurney-Flap, und
- Störung der Zweidimensionalität der Nachlaufströmung.

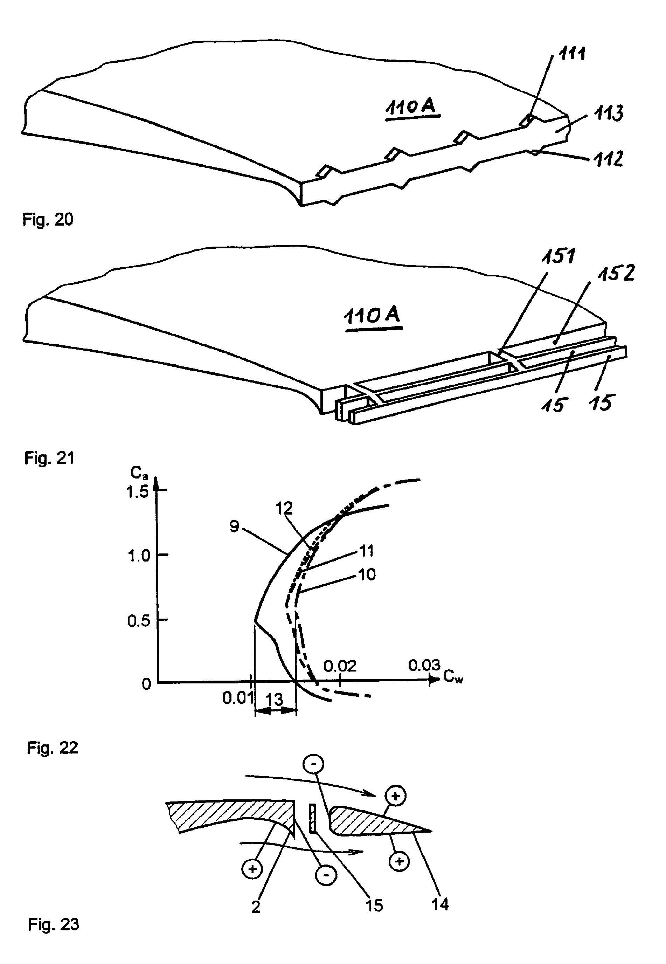

Die Rückströmung kann auch durch Einbringen von geeigneten Körpern in das Totwasser behindert werden. Die Zweidimensionalität beim Nachlauf eines Zylinders kann durch Aufbringen einer spiraligen Struktur auf den Zylinder gestört werden. Diese Maßnahme, die man häufig an Fabrikschornstein-Rohren sieht, unterdrückt das Entstehen von periodischen Wirbeln. Eine vergleichbare Funktion haben die geschlitzten, gelochten und gezackten Kanten der Gurney-Flap.
Eine gezackte Hinterkante wurde schon beschrieben, jedoch nur für die Druckseite des Flügelprofils. Windkanalversuche haben jedoch gezeigt, dass die Nachlauf-Instabilität wesentlich wirksamer unterdrückt werden kann, wenn Zacken 111, 112 oder ähnliche Kantengeometrien für Störungsmittel auf beiden Seiten der Hinterkante 113, also druckseitig und an der Saugseite 110A angebracht werden (Fig. 20). Dabei ist es irrelevant, ob die Zacken einander direkt gegenüber liegen oder gegeneinander versetzt angeordnet werden.

Völlig neu ist eine Konfiguration nach Fig. 21, eine perspektivische Ansicht einer Saugseite 110A eines Flügelprofils, mit rechteckigen Querkörpern 15 im Totwasser hinter der Hinterkante 152, die mit dieser durch Stege 151 verbunden sein können. Durch diese Anordnung wird die Rückströmung im Totwasser behindert und die Nachlaufströmung stabilisiert, was sich ebenfalls in einer Widerstandsverminderung ausdrückt.

Um verlässliche Aussagen über die erreichbare Widerstandsverminderung zu erhalten, wurde dazu Windkanalversuche ausgeführt. Dabei wurde ein typisches Segelflug-Profil mit der Bezeichnung HQ 17 mit einer Gurney-Flap ausgerüstet. Diese bestand aus einem scharf um 90 nach unten abgekanteten Winkel, dessen Höhe 1% der Profiltiefe betrug. Die Reynolds-Zahl des Versuchsflügels betrug Re = 1 × 10⁶. Auftrieb und Widerstand wurden mit einer präzisen Windkanalwaage gemessen. Der an sich schon sehr geringe Widerstand des gewählten Profils erlaubte es, Veränderungen des Widerstandes der Gurney-Flap genau festzustellen. Typische Polaren-Messungen des Widerstandsbeiwerts C_{w} - im Bereich von 0 bis zum Wert 0,03 - und des Auftriebsbeiwerts Cₐ - im Bereich von 0 bis zum Wert 1.5 - sind in Fig. 22 zu sehen. Die Polare 9 für einen Referenzflügel ohne Gurney-Flap hat naturgemäß den niedrigsten Widerstandsbeiwert C_{w}. Bei der herkömmlichen Gurney-Flap ohne Mittel zur Störung einer periodischen Strömungsablösung steigt der Widerstand erheblich, und die Polare 10 der Flügel mit Gurney-Flap ist daher zu höherem Widerstand verschoben. Andererseits ist auch der beträchtliche Auftriebsgewinn in Fig. 22 deutlich zu sehen. Die Widerstandsdifferenz zwischen den Polaren 9 und 10 ist als parasitärer Widerstand 13 eingezeichnet. Dieser kann um 20 - 25 % vermindert werden durch Nachlauf-Stabilisierung oder Störungsmittel in Kombination mit den Hinterkanten-Konfigurationen nach Fig. 5 -20.

Die Daten der Konfiguration mit der Hinterkante nach Fig. 20 zeigt die Kurve 11 in Fig. 22. Die Daten der Hinterkante mit Querkörpern im Totwasser gemäß Fig. 21 (erfindungsgemäß) sind in Kurve 12 von Fig. 22 wiedergegeben. Die Hitzdrahtmessungen zeigen, dass die Konfigurationen die periodische Wirbelbildung vollständig unterdrücken. Diese Eigenschaft ist besonders dann nützlich, wenn die Lärmabstrahlung der Gurney-Flap besonders niedrig sein muss, z.B. bei Windturbinen.
Die Stabilisierung des Nachlaufs der Gurney-Flap hat nur ein begrenztes Potenzial zur Reduktion des parasitären Widerstandes, in der Größenordnung von ca. 25%, dargestellt in Fig. 22. Es gibt jedoch eine Möglichkeit den parasitären Widerstand weiter stark zu reduzieren, und zwar durch Auffüllung des Nachlaufs, wie in Fig. 23 schematisch gezeigt. Saugkräfte sind als Minus-Zeichen und Druckkräfte als Plus-Zeichen dargestellt. Dadurch wird folgendes erreicht:
- Der Nachlauf wird durch Nachlauf-Körper hinter der Gurney-Flap stabilisiert.
- Der Nachlaufkörper 14 wird bevorzugt zusätzlich durch einen senkrechten Profil-Körper 15 ergänzt, der die Rückströmung im Bereich zwischen Gurney-Flap und Nachlaufkörper behindert.
- Trotzdem ist ein Druckausgleich zwischen Saugseite und Druckseite durch den Abstand zwischen Gurney-Flap und Nachlaufkörper möglich, d.h. der Auftriebsgewinn der Gurney-Flap bleibt erhalten.
- Der Widerstand wird dramatisch gesenkt, durch folgende Situation: Die widerstandserhöhende Saugkraft hinter der Gurney-Flap wirkt auch auf die Vorderseite des Nachlaufkörpers. Die resultierende Widerstandskraft wird dadurch teilweise aufgehoben. Der hintere Teil des Nachlaufkörpers wirkt auf Grund seiner Zuspitzung wie ein Diffusor. Es baut sich daher auf dem hinteren Teil des Nachlaufkörpers ein erhöhter Druck auf. Die resultierende Kraft aus diesem erhöhten Druck wirkt der Widerstandskraft aus dem erhöhten Druck vor der Gurney-Flap entgegen. Der Gesamtwiderstand der Gurney-Flap mit Nachlaufkörper muss daher notwendigerweise erheblich sinken.
- Die verlustreiche abgelöste Strömung hinter der Gurney-Flap wird wieder zusammengeführt durch anliegende Strömung auf dem Nachlaufkörper. Das führt zu einer drastischen Verkleinerung der Nachlaufdelle bzw. absoluten Instabilität im Geschwindigkeitsprofil hinter dem Tragflügel. Dies ist gleichbedeutend mit einer Widerstandsverminderung.

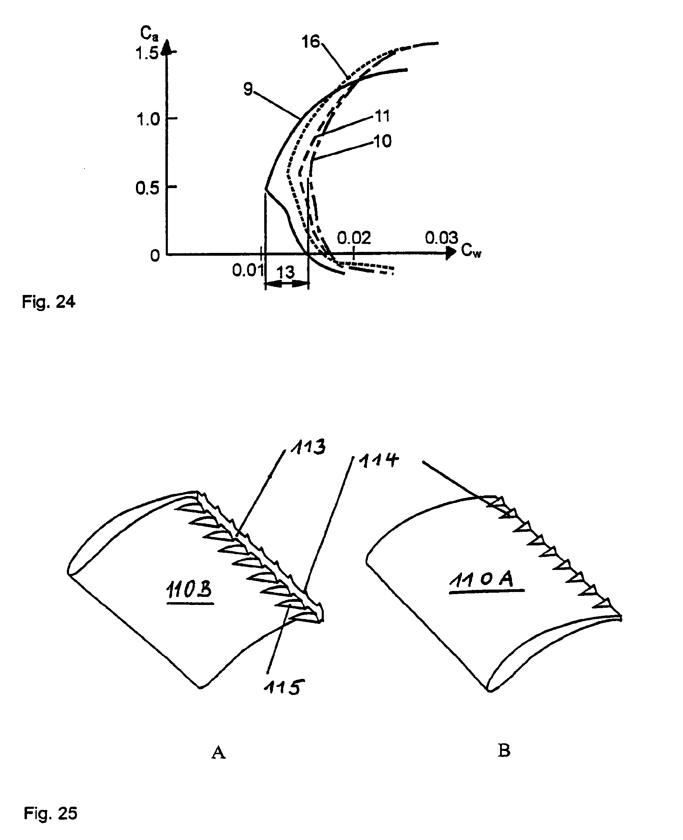

Auch für die Konfiguration mit Nachlaufkörper nach Fig. 23 wurden mit demselben Tragflügelprofil (HQ17) und derselben Höhe der Gurney-Flap von 1% der Flügeltiefe, Messdaten im Windkanal aufgenommen. Die Reynolds-Zahl war wieder, wie zu Fig. 22 kommentiert, Re = 1 × 10⁶.
Die Ergebnisse zeigt Fig. 24. Dort sieht der Fachmann, dass mit dem Nachlaufkörper noch einmal eine dramatische Widerstandsverminderung erreicht wird, in einer Größenordnung von 60% des parasitären Widerstandes. Der quantitative Vergleich zwischen Referenzflügel bzw. Polare 9, Gurney-Flap entsprechend Polare 10, Gurney-Flap mit saug- und druckseitigen Störungsmitteln an der Hinterkante nach Fig. 21 entsprechend Polare 11 und Gurney-Flap mit Nachlaufkörper gemäß Fig. 23, entsprechend Polare 16, zeigt deutliche Verbesserungen. Das Verhältnis von Auftrieb zu Widerstand wird bei dem schon sehr widerstandsarmen Flügel gemäß Fig. 23 praktisch nicht verändert.

In der Praxis bedeutet dies, wie der Fachmann leicht nachrechnen kann, dass sich dieser Flügel so verhält, wie ein um ca. 12% vergrößerter Flügel. Bei einem Verkehrsflugzeug könnte das Gewicht bei gleicher Flügelgröße also um 12% erhöht werden. Bei einem Segelflugzeug würde die Sinkgeschwindigkeit um ca. 6% reduziert.

Im Folgenden soll eine praktische Form einer Strömungsmaschine dargestellt werden. Hierbei ist besonders die Einfachheit und die Steifigkeit der Hinterkanten-Konstruktion gefragt. Daher ist eine Ausführung der Flügel- bzw. Schaufel-Hinterkante, z.B. nach Fig. 17 oder 20 besonders geeignet. Eine Kompressorschaufel könnte z.B. entsprechend Fig. 25 gestaltet werden. Die Hinterkantenstrukturen sind übertrieben vergrößert dargestellt; die Höhe bzw. Breite der Hinterkante bzw. Höhe und Länge der Störungsmittel beträgt nur max. 5 %, vorzugsweise 0,5-1 % der Flügel- bzw. Schaufeltiefe, welche durch den Abstand von Vorderkante zur Hinterkante des Flügels definiert ist.

Eine Schaufel gemäß Fig. 25 kann z.B. durch Gießen, galvanische Abtragung, Gesenkschmieden oder Fräsen mit geeigneten Formfräsern hergestellt werden. Die Zacken können als verlängerte Stege mit der Schaufel aus einem Stück gefertigt werden. Andererseits kann auch ein gezacktes Metall- oder Kunststoffband nachträglich auf die divergierende verdickte oder abgeknickte Hinterkante aufgebracht werden, z.B. durch Kleben, Löten oder Schweißen. Am einfachsten ist jedoch eine solche Schaufel mit gezackter Hinterkante herzustellen, wenn sie aus einem Stück gegossen wird.
Teilbild B zeigt die Druckseite 110B und Teilbild A die Saugseite 110A der Kompressorschaufel analog Fig. 20, deren Hinterkante 113 mit rippenförmigen oder stegartigen, auf den Profilflächen ansetzenden und zur Hinterkante verlaufenden und dort endenden Störungsmitteln 114, 115, deren Querschnittsform dreieckig ist.
Bei Anwendung auf Windturbinen ist es am einfachsten, wenn eine Hinterkante gemäß Fig. 16, 17 oder 20 aus Blech gefertigt und als Blechwinkel an ein herkömmliches Profil angeklebt wird.

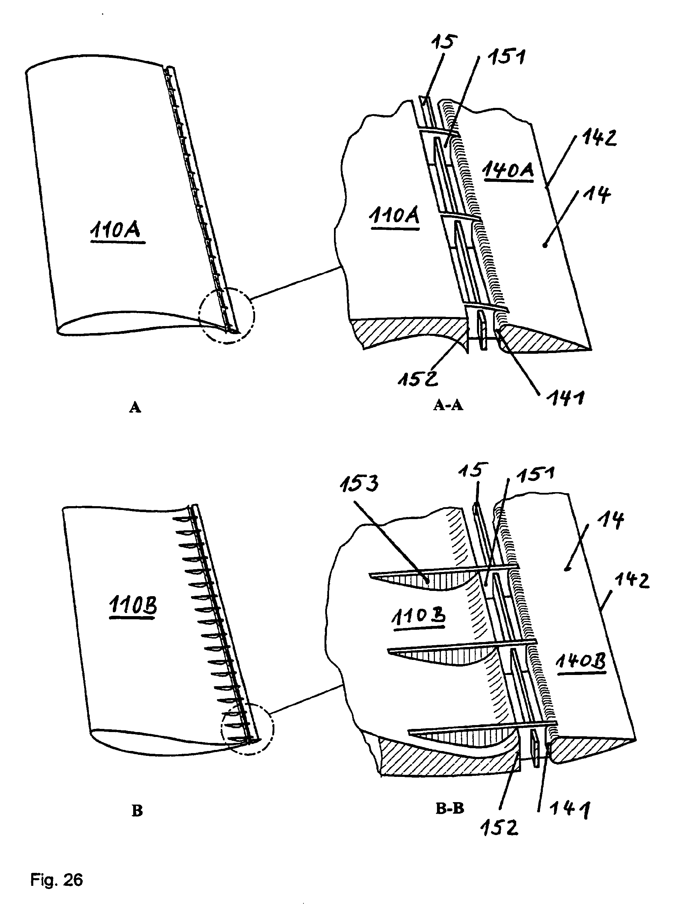

Für den Reiseflug von Verkehrsflugzeugen ist eine Flügelhinterkante nach Fig. 23 besonders geeignet. Bei transsonischer Strömung, wie sie dort auftritt, werden die Vorteile divergenter Hinterkanten so noch einmal verstärkt. Die bedeutende Widerstandsverminderung, die durch eine divergente Flügelhinterkante mit Nachlaufkörper erreicht wird, sollte daher eine Implementierung der Erfindung bei Verkehrsflugzeugen sehr fördern, da geringerer Treibstoffverbrauch und / oder eine höhere Zuladung möglich sind. Eine andere technische Ausführungsmöglichkeit ist in Fig. 11 gezeigt. Auch hier sind die wirklichen Dimensionen der divergenten Flügelhinterkante und der Nachlaufkörper sehr klein und bei einem Verkehrsflugzeug nur wenige Zentimeter groß.
Teilbild A zeigt die Saugseite 110A oder Flügeloberseite perspektivisch und Teilbild A-A dessen Teilvergrößerung im Teilschnitt. Ebenso zeigt Teilbild B die Druckseite 110B oder Flügelunterseite perspektivisch und vergrößert im Teilschnitt als Teilbild B-B. Für eine ausreichende Steifigkeit der Flügelhinterkante sorgt die Bauhöhe der divergenten Hinterkante 152 mit druckseitig aufgesetzten Verstärkungsrippen und Störungsmittel 153. Diese Verstärkungsrippen gehen in Stege 151 über und tragen auch die Nachlaufkörper 14 und 15. In Windkanalversuchen ist nachgewiesen worden, dass die Verstärkungsstege keine messbare Widerstandserhöhung verursachen. Der Querschnitt der Flügelhinterkante nach Fig. 26 entspricht dem der Fig. 23. Die Höhe der Gurney-Flap bzw. der divergenten Hinterkante liegt im Bereich von ca. 0,3 bis 1% der Flügeltiefe. Die Weite des Spalts bzw. Abstands zwischen Gurney-Flap 152 und Nachlaufkörper 14 entspricht etwa der Höhe der Gurney-Flap. In dem Spalt in der rechteckig geformte profilierte Körper 15 zur Störung einer Rücklaufströmung angeordnet. Der Nachlaufkörper 14 ist im Querschnitt etwa dreieckig mit spitz aufeinander zulaufender Druckseite 140b und Saugseite 140A und hat etwa die gleiche Dicke an seiner abgerundeten Vorderseite 141 wie die Höhe der Gurney-Flap. Seine Länge bis zur Hinterkante 142 ist etwa 3 bis 4 mal so groß wie die Dicke an seiner Vorderseite 141.

Unabhängig von dieser Anwendung im Reiseflug von Verkehrsflugzeugen können Gurney-Flaps auch vorteilhaft zur Auftriebserhöhung bei Landeanflug und Start verwendet werden. Selbst bei bereits voll ausgefahrenen konventionellen Klappensystemen werden dadurch immer noch Verbesserungen im Auftrieb erreicht. Hier kommen besonders Gurney-Flaps mit Hinterkanten wie oben als erste und zweite Lösung beschrieben in Frage.

Schließlich besteht noch die Möglichkeit, den Nachlaufkörper 14 analog Fig. 23 beweglich an Steg 15 oder Hinterkante 2 zu lagern und als zusätzliche Hochauftriebsklappe bei Landung und Start nach unten ausschlagen zu lassen.

## Patentansprüche

1. Flügelprofil, an dem sich bei Anströmung durch ein Fluid eine Saugseite und eine Druckseite ausbildet, insbesondere Flugzeugtragflügel oder Schaufel einer Strömungsmaschine, und das eine divergente verdickte oder abgewinkelte Hinterkante aufweist, wobei die Hinterkante (152) eine erste sich quer zur Strömungsrichtung erstreckende Ecke aufweist, an der die Saugseite in eine zweidimensionale Oberflächenebene der Hinterkante (152) übergeht, und wobei die Hinterkante (152) eine zweite sich quer zur Strömungsrichtung erstreckende Ecke aufweist, durch die die zweidimensionale Oberflächenebene zur Druckseite begrenzt ist,
**dadurch gekennzeichnet,**
**dass** hinter der Hinterkante (152) Mittel zur Behinderung einer Rückströmung des Fluids angeordnet sind und dass die Mittel profilierte Körper aufweisen, die als Stäbe (15) senkrecht zur Strömungsrichtung an der Saug- oder Druckseite angeordnet und mit der Hinterkante (152) durch Stege (151) verbunden sind.

2. Flügelprofil nach Anspruch 1, **dadurch gekennzeichnet, dass** die Stäbe insbesondere parallel zur Hinterkante angeordnet sind und dass deren Grundform im Querschnitt annähernd rechteckig, dreieckig oder tropfenförmig ist.

3. Flügelprofil nach einem der Ansprüche 1 - 2, **dadurch gekennzeichnet, dass** die profilierten Körper (14, 15) in Strömungsrichtung von der Hinterkante (152) beabstandet sind.

4. Flügelprofil nach einem der Ansprüche 1 - 3, **dadurch gekennzeichnet, dass** in Strömungsrichtung mehrere profilierte Körper (14, 15) in Abständen zueinander angeordnet sind.

5. Flügelprofil nach einem der Ansprüche 1 - 4, **dadurch gekennzeichnet, dass** mindestens einer der profilierten Körper bewegbar gelagert und zur Druckseite hin verstellbar ist.

## Claims

1. Aerofoil profile, upon which a suction side and a pressure side are formed during exposure to incident flow by a fluid, especially an aircraft wing or a blade of a turbomachine, and which has a divergent thickened or angled-down trailing edge, the trailing edge (152) having a first corner, which extends transversely to the flow direction and at which the suction side goes over into a two-dimensional surface plane of the trailing edge (152), and the trailing edge (152) having a second corner, which extends transversely to the flow direction and by which the two-dimensional surface plane is delimited with respect to the pressure side, **characterized in that** means for impeding a backflow of the fluid are arranged behind the trailing edge (152) and **in that** the means comprise profiled bodies which, as bars (15), are arranged perpendicularly to the flow direction on the suction side or pressure side and are connected to the trailing edge (152) by means of ribs (151).

2. Aerofoil profile according to Claim 1, **characterized in that** the bars are especially arranged parallel to the trailing edge and **in that** the basic shape of the bars in cross section is approximately rectangular, triangular or teardrop-shaped.

3. Aerofoil profile according to one of Claims 1 - 2, **characterized in that** the profiled bodies (14, 15) are spaced at a distance from the trailing edge (152) in the flow direction.

4. Aerofoil profile according to one of Claims 1 - 3, **characterized in that** a plurality of profiled bodies (14, 15) are arranged at distances from each other in the flow direction.

5. Aerofoil profile according to one of Claims 1 - 4, **characterized in that** at least one of the profiled bodies is movably mounted and adjustable towards the pressure side.

## Revendications

1. Profil d'aile, sur lequel sont réalisés pour le soufflage par un fluide, un côté d'aspiration et un côté de refoulement, en particulier aile portante d'avion ou palette d'une turbomachine et qui présente une arête arrière épaissie ou coudée divergente, l'arête arrière (152) présentant un premier coin s'étendant transversalement au sens de passage, sur lequel le côté d'aspiration se fond en un plan de surface bidimensionnel de l'arête arrière (152), et l'arête arrière (152) présentant un second coin s'étendant transversalement au sens de passage, par lequel le plan de surface bidimensionnel est limité vers le côté de refoulement,
**caractérisé en ce que**
derrière l'arête arrière (152) sont disposés des moyens pour empêcher un refoulement du fluide et **en ce que** les moyens présentent des corps profilés qui sont disposés comme des barres (15) perpendiculairement au sens de passage sur le côté d'aspiration ou de refoulement et sont reliés à l'arête arrière (152) par des nervures (151).

2. Profil d'aile selon la revendication 1, **caractérisé en ce que** les barres sont disposées en particulier parallèlement à l'arête arrière et **en ce que** leur section transversale présente une forme de base approximativement rectangulaire, triangulaire ou ovoïde.

3. Profil d'aile selon l'une quelconque des revendications 1 à 2, **caractérisé en ce que** les corps profilés (14, 15) sont espacés dans le sens de passage de l'arête arrière (152).

4. Profil d'aile selon l'une quelconque des revendications 1 à 3, **caractérisé en ce que** plusieurs corps profilés (14, 15) sont disposés à distance les uns des autres dans le sens de passage.

5. Profil d'aile selon l'une quelconque des revendications 1 à 4, **caractérisé en ce qu'**au moins l'un des corps profilés est logé de manière mobile et peut être réglé vers le côté de refoulement.
